(19) Europäisches Patentamt
European Patent Office
Office européen des brevets

(11) **EP 2 411 485 B1**

(12) **FASCICULE DE BREVET EUROPEEN**

(45) Date de publication et mention
de la délivrance du brevet:
**14.08.2013 Bulletin 2013/33**

(21) Numéro de dépôt: **10708560.7**

(22) Date de dépôt: **16.03.2010**

(51) Int Cl.:
***C09K 11/81*** [(2006.01)]    ***C01B 25/45*** [(2006.01)]

(86) Numéro de dépôt international:
**PCT/EP2010/053342**

(87) Numéro de publication internationale:
**WO 2010/108815 (30.09.2010 Gazette 2010/39)**

(54) **PHOSPHATE DE LANTHANE, DE CERIUM ET DE TERBIUM DE TYPE COEUR/COQUILLE, LUMINOPHORE COMPRENANT CE PHOSPHATE ET PROCEDES DE PREPARATION**

KERN/SCHALE-LANTHAN-CER-TERBIUMPHOSPHAT, DIESES PHOSPHAT ENTHALTENDER LEUCHTSTOFF SOWIE HERSTELLUNGSVERFAHREN

CORE/SHELL LANTHANUM CERIUM TERBIUM PHOSPHATE, PHOSPHOR CONTAINING SAID PHOSPHATE, AND PREPARATION METHODS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.03.2009 FR 0901373**

(43) Date de publication de la demande:
**01.02.2012 Bulletin 2012/05**

(73) Titulaire: **Rhodia Opérations**
**93306 Aubervilliers (FR)**

(72) Inventeurs:
• **BUISSETTE, Valérie**
**F-75015 Paris (FR)**
• **LE-MERCIER, Thierry**
**F-93110 Rosny-sous-Bois (FR)**

(74) Mandataire: **Dubruc, Philippe**
**Rhodia Operations**
**Propriété Industrielle**
**40 rue de la Haie-Coq**
**93306 Aubervilliers Cedex (FR)**

(56) Documents cités:
**WO-A1-2008/012266    US-A- 3 634 282**

• **KARPOVICH L ET AL: "Synthesis and characterization of mixed-morphology CePO4 nanoparticles" JOURNAL OF SOLID STATE CHEMISTRY, ORLANDO, FL, US, vol. 180, 1 janvier 2007 (2007-01-01), pages 840-846, XP002508183 ISSN: 0022-4596**

Remarques:
Le dossier contient des informations techniques présentées postérieurement au dépôt de la demande et ne figurant pas dans le présent fascicule.

**Description**

La présente invention concerne un phosphate de lanthane, de cérium et de terbium de type coeur/coquille, un luminophore comprenant ce phosphate et leurs procédés de préparation.

Les phosphates mixtes de lanthane, de cérium et de terbium, ci après désignés phosphates de LaCeT, sont bien connus pour leurs propriétés de luminescence. Ils émettent une vive lumière verte lorsqu'ils sont irradiés par certains rayonnements énergétiques de longueurs d'ondes inférieures à celles du domaine visible (rayonnements UV ou VUV pour les systèmes d'éclairage ou de visualisation). Des luminophores exploitant cette propriété sont couramment utilisés à l'échelle industrielle, par exemple dans des lampes fluorescentes trichromatiques, dans des systèmes de rétro-éclairage pour afficheurs à cristaux liquides ou dans des systèmes plasma.

Ces luminophores contiennent des terres rares dont le prix est élevé et est aussi soumis à des fluctuations importantes. La réduction du coût de ces luminophores constitue donc un enjeu important.

Dans ce but, on a mis au point des luminophores de type coeur/coquille qui comportent un coeur en un matériau non luminophore et dont seule la coquille contient les terres rares ou les terres rares les plus chères. Grâce à cette structure on réduit la quantité de terres rares dans le luminophore. Des luminophores de ce type sont décrits dans WO 2008/012266.

Par ailleurs, outre le besoin en produits à coût plus faible, on cherche aussi à disposer de luminophores fins car la mise en oeuvre de produits fins présente l'avantage d'être plus facile au moins dans certaines applications, par exemple dans certaines lampes trichromatiques. Néanmoins on sait qu'une taille de produit fine peut perturber et réduire les propriétés de luminescence de ces produits.

L'objet de l'invention est d'offrir des luminophores qui présentent un bon compromis entre la taille et les propriétés de luminescence.

Dans ce but, le phosphate de l'invention est du type comprenant des particules constituées d'un coeur minéral et d'une coquille à base d'un phosphate de lanthane, de cérium et de terbium et recouvrant de façon homogène le coeur minéral sur une épaisseur égale ou supérieure à 300 nm, et il est caractérisé en ce que les particules présentent un diamètre moyen compris entre 3 et 6 $\mu$m et en ce que le phosphate de lanthane, de cérium et de terbium répond à la formule générale (1) suivante :

$$La_{(1-x-y)}Ce_xTb_yPO_4 \qquad (1)$$

dans laquelle x et y vérifient les conditions suivantes :

$$0,4 \leq x \leq 0,7;$$

$$0,13 \leq y \leq 0,17.$$

L'invention concerne aussi un luminophore qui est caractérisé en ce qu'il comprend un phosphate du type décrit ci-dessus.

Du fait de la combinaison spécifique de ses caractéristiques, le luminophore de l'invention présente une granulométrie fine et des propriétés de luminescence généralement comparables à celles des luminophores de type coeur/coquille connus.

D'autres caractéristiques, détails et avantages de l'invention apparaîtront encore plus complètement à la lecture de la description qui va suivre, ainsi que du dessin annexé dans lequel :

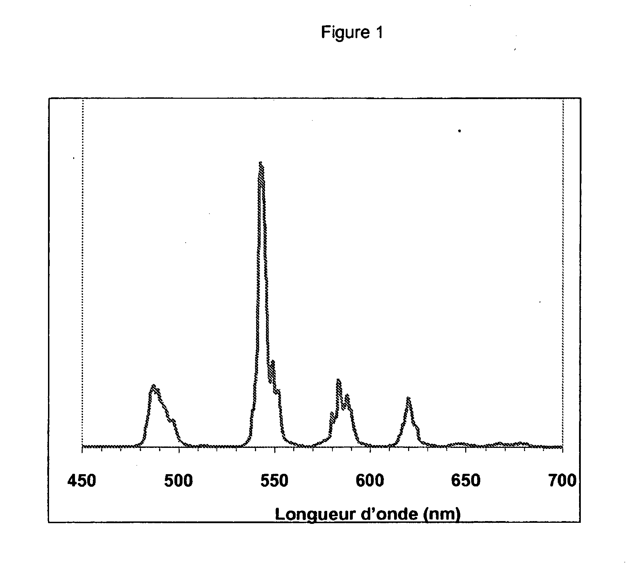

-   la figure 1 est un spectre d'émission d'un luminophore selon l'invention.

On précise aussi pour la suite de la description que, sauf indication contraire, dans toutes les gammes ou limites de valeurs qui sont données, les valeurs aux bornes sont incluses, les gammes ou limites de valeurs ainsi définies couvrant donc toute valeur au moins égale et supérieure à la borne inférieure et/ou au plus égale ou inférieure à la borne supérieure.

Par terre rare on entend pour la suite de la description les éléments du groupe constitué par l'yttrium et les éléments de la classification périodique de numéro atomique compris inclusivement entre 57 et 71.

On entend par surface spécifique, la surface spécifique B.E.T. déterminée par adsorption du krypton. Les mesures de surface données dans la présente description ont été effectuées sur un appareil ASAP2010 après dégazage de la poudre pendant 8h, à 200°C.

Comme cela a été vu plus haut, l'invention concerne deux types de produits : des phosphates qui pourront être appelés aussi dans la suite de cette description « précurseurs » et des luminophores obtenus à partir de ces phosphates ou précurseurs. Les luminophores ont, eux, des propriétés de luminescence suffisantes pour les rendre directement utilisables dans les applications souhaitées. Les précurseurs n'ont pas de propriétés de luminescence ou éventuellement des propriétés de luminescence trop faibles pour une utilisation dans ces mêmes applications.

Ces deux types de produits vont maintenant être décrits plus précisément. On précise ici que l'on pourra se référer d'une manière générale à l'enseignement de WO 2008/012266 qui concerne des produits de même structure et qui s'applique donc à la présente description sauf indications contraires, plus spécifiques ou plus particulières.

Les phosphates ou précurseurs

Les phosphates de l'invention se caractérisent d'abord par leur structure spécifique de type coeur/coquille qui va être décrite ci-dessous.

Le coeur minéral est à base d'un matériau qui peut être notamment un oxyde ou un phosphate.

Parmi les oxydes, on peut citer en particulier les oxydes de zirconium, de zinc, de titane, de magnésium, d'aluminium (alumine) et des terres rares. Comme oxyde de terre rare on peut mentionner plus particulièrement encore l'oxyde de gadolinium, l'oxyde d'yttrium et l'oxyde de cérium.

L'oxyde d'yttrium, l'oxyde de gadolinium et l'alumine pourront être choisis de préférence.

Parmi les phosphates, on peut mentionner les phosphates (orthophosphates) d'une ou de plusieurs terres rares, l'une d'entre elles pouvant éventuellement jouer le rôle de dopant, telles que le lanthane ($LaPO_4$), le lanthane et le cérium ($(LaCe)PO_4$), l'yttrium ($YPO_4$), le gadolinium ($GdPO_4$) les polyphosphates de terres rares ou d'aluminium.

Selon un mode de réalisation particulier, le matériau du coeur est un orthophosphate de lanthane, un orthophosphate de gadolinium ou un orthophosphate d'yttrium.

On peut aussi mentionner les phosphates alcalino-terreux comme $Ca_2P_2O_7$, le phosphate de zirconium $ZrP_2O_7$, les hydroxyapatites d'alcalino-terreux.

Par ailleurs, conviennent d'autres composés minéraux tels que les vanadates, notamment de terre rare, (tels que $YVO_4$), les germanates, la silice, les silicates, notamment le silicate de zinc ou de zirconium, les tungstates, les molybdates, les sulfates (tels que $BaSO_4$), les borates (tels que $YBO_3$, $GdBO_3$), les carbonates et les titanates (tels que $BaTiO_3$), les zirconates, les aluminates de métaux alcalino-terreux, éventuellement dopés par une terre rare, comme les aluminates de baryum et/ou de magnésium, tels que $MgAl_2O_4$, $BaAl_2O_4$, ou $BaMgAl_{10}O_{17}$.

Enfin, peuvent être appropriés les composés issus des composés précédents tels que les oxydes mixtes, notamment de terres rares, par exemple les oxydes mixtes de zirconium et de cérium, les phosphates mixtes, notamment de terres rares et, plus particulièrement, de cérium, yttrium, lanthane et gadolinium et les phosphovanadates.

En particulier, le matériau du coeur peut présenter des propriétés optiques particulières, notamment des propriétés réflectrices des rayonnements UV.

Par l'expression "le coeur minéral est à base de", on entend désigner un ensemble comprenant au moins 50%, de préférence au moins 70% et plus préférentiellement au moins 80%, voire 90% en masse du matériau considéré. Selon un mode particulier, le coeur peut être essentiellement constitué par ledit matériau (à savoir en une teneur d'au moins 95% en masse, par exemple au moins 98%, voire au moins 99% en masse) ou encore entièrement constitué par ce matériau.

Plusieurs variantes intéressantes de l'invention vont être décrites maintenant ci-dessous.

Selon une première variante, le coeur est en un matériau dense ce qui correspond en fait à un matériau généralement bien cristallisé ou encore à un matériau dont la surface spécifique est faible.

Par surface spécifique faible, on entend une surface spécifique d'au plus 5 $m^2$/g, plus particulièrement d'au plus 2 $m^2$/g, encore plus particulièrement d'au plus 1 $m^2$/g, et notamment d'au plus 0,6 $m^2$/g.

Selon une autre variante, le coeur est à base d'un matériau stable en température. On entend par là un matériau dont le point de fusion se situe à une température élevée, qui ne se dégrade pas en sous produit gênant pour l'application comme luminophore à cette même température et qui reste cristallisé et donc qui ne se transforme pas en matériau amorphe toujours à cette même température. La température élevée qui est visée ici est une température au moins supérieure à 900°C, de préférence au moins supérieure à 1000°C et encore plus préférentiellement d'au moins 1200°C.

La troisième variante consiste à utiliser pour le coeur un matériau qui combine les caractéristiques de deux variantes précédentes donc un matériau de faible surface spécifique et stable en température.

Le fait d'utiliser un coeur selon au moins une des variantes décrites ci-dessus, offre plusieurs avantages. Tout d'abord, la structure coeur/coquille du précurseur est particulièrement bien conservée dans le luminophore qui en est issu ce qui permet d'obtenir un avantage coût maximum.

Par ailleurs, il a été constaté que les luminophores obtenus à partir des précurseurs de l'invention dans la fabrication desquels on a utilisé un coeur selon au moins une des variantes précitées, présentaient des rendements de photoluminescence non seulement identiques mais dans certains cas supérieurs à ceux d'un luminophore de même composition mais qui ne présente pas la structure coeur-coquille.

Les matériaux du coeur peuvent être densifiés notamment en utilisant la technique connue des sels fondus. Cette technique consiste à porter le matériau à densifier à une température élevée, par exemple d'au moins 900°C, éventuellement sous atmosphère réductrice, par exemple un mélange argon/hydrogène, en présence d'un agent fondant qui peut être choisi parmi les chlorures (chlorure de sodium, de potassium par exemple), les fluorures (fluorure de lithium par exemple), les borates (borate de lithium), les carbonates ou l'acide borique.

Le coeur peut avoir un diamètre moyen compris notamment entre 1 et 5,5 $\mu$m, plus particulièrement entre 2 et 4,5 $\mu$m.

Ces valeurs de diamètre peuvent être déterminées par microscopie électronique à balayage (MEB) par comptage statistique d'au moins 150 particules.

Les dimensions du coeur, de même que celles de la coquille qui sera décite plus loin, peuvent aussi être mesurées sur des photographies de microscopie électronique en transmission (MET) de coupes des compositions/précurseurs de l'invention.

L'autre caractéristique de structure des compositions/précurseurs de l'invention est la coquille.

Cette coquille recouvre de façon homogène le coeur sur une épaisseur qui est égale ou supérieure à 300 nm. Par "homogène", on entend une couche continue, recouvrant totalement le coeur et dont l'épaisseur n'est de préférence jamais inférieure à 300 nm. Cette homogénéité est notamment visible sur des clichés de microscopie électronique à balayage. Des mesures de diffraction par des rayons X (DRX) mettent en évidence en outre la présence de deux compositions distinctes entre le coeur et la coquille.

L'épaisseur de la couche peut être plus particulièrement d'au moins 500 nm. Elle peut être égale ou inférieure à 2000 nm (2$\mu$m), plus particulièrement égale ou inférieure à 1000 nm.

Le phosphate qui est présent dans la coquille répond à la formule générale (1) suivante :

$$La_{(1-x-y)}Ce_xTb_yPO_4 \qquad (1)$$

dans laquelle x et y vérifient les conditions suivantes :

$$0,4 \leq x \leq 0,7;$$

$$0,13 \leq y \leq 0,17.$$

Plus particulièrement, le phosphate de lanthane, de cérium et de terbium de la coquille peut répondre à la formule générale (1) dans laquelle x vérifie la condition $0,43 \leq x \leq 0,60$ et plus particulièrement $0,45 \leq x \leq 0,60$.

Plus particulièrement aussi, le phosphate de lanthane, de cérium et de terbium de la coquille peut répondre à la formule générale (1) dans laquelle y vérifie la condition $0,13 \leq y \leq 0,16$ et plus particulièrement $0,15 \leq y \leq 0,16$.

L'invention couvre aussi le mode de réalisation plus particulier dans lequel x et y vérifient en même temps les deux conditions particulières données ci-dessus.

On notera qu'il n'est pas exclu que la coquille puisse comprendre d'autres espèces phosphatées résiduelles.

La coquille peut comprendre avec le phosphate de LaCeT d'autres éléments jouant classiquement un rôle notamment de promoteur ou dopant des propriétés de luminescence ou de stabilisateur des degrés d'oxydation des éléments cérium et terbium. A titre d'exemple de ces éléments, on peut citer plus particulièrement le bore et d'autres terres rares comme notamment le scandium, l'yttrium, le lutécium et le gadolinium. Les terres rares précitées peuvent être plus particulièrement présentes en substitution de l'élément lanthane. Ces éléments dopants ou stabilisateurs sont présents en une quantité généralement d'au plus 1% en masse d'élément par rapport à la masse totale du phosphate de l'invention dans le cas du bore et généralement d'au plus 30% pour les autres éléments mentionnés ci-dessus.

Il est à souligner que, le plus souvent, dans les particules de précurseurs sensiblement tout le phosphate de LaCeT est localisé dans la couche entourant le coeur.

Les phosphates de l'invention se caractérisent aussi par leur granulométrie.

Ils sont en effet constitués de particules présentant généralement une taille moyenne comprise entre 3 $\mu$m et 6 $\mu$m, plus particulièrement entre 3 $\mu$m et 5 um.

Le diamètre moyen auquel il est fait référence est la moyenne en volume des diamètres d'une population de particules.

Les valeurs de granulométrie données ici et pour le reste de la description sont mesurées au moyen d'un granulométre laser de type Malvem sur un échantillon de particules dispersées dans l'eau aux ultrasons (130 W) pendant 1 minute 30 secondes.

Par ailleurs, les particules ont de préférence un faible indice de dispersion, typiquement d'au plus 0,6 et de préférence d'au plus 0,5.

Par "indice de dispersion" d'une population de particules, on entend, au sens de la présente description, le rapport I tel que défini ci-dessous :

$$I = (\varnothing_{84} - \varnothing_{16})/(2 \times \varnothing_{50}),$$

où : $\varnothing_{84}$ est le diamètre des particules pour lequel 84% des particules ont un diamètre inférieur à $\varnothing_{84}$;

$\varnothing_{16}$ est le diamètre des particules pour lequel 16% des particules ont un diamètre inférieur à $\varnothing_{16}$; et

$\varnothing_{50}$ est le diamètre moyen des particules, diamètre pour lequel 50% des particules ont un diamètre inférieur à $\varnothing_{50}$.

Cette définition de l'indice de dispersion donnée ici pour les particules des précurseurs s'applique aussi pour le reste de la description aux luminophores.

Bien que les phosphates/précurseurs selon l'invention puissent présenter éventuellement des propriétés de luminescence après exposition à certaines longueurs d'onde, il est possible et même nécessaire d'améliorer encore ces propriétés de luminescence en procédant sur ces produits à des post-traitements et ceci afin d'obtenir de véritables luminophores directement utilisables en tant que tels dans l'application souhaitée.

On comprend que la frontière entre un précurseur et un réel luminophore reste arbitraire et dépend du seul seuil de luminescence à partir duquel on considère qu'un produit peut être directement mis en oeuvre de manière acceptable par un utilisateur.

Dans le cas présent et de manière assez générale, on peut considérer et identifier comme précurseurs de luminophores des phosphates selon l'invention qui n'ont pas été soumis à des traitements thermiques supérieurs à environ 900°C, car de tels produits présentent généralement des propriétés de luminescence que l'on peut juger comme ne satisfaisant pas au critère minimum de brillance des luminophores commerciaux susceptibles d'être utilisés directement et tels quels, sans aucune transformation ultérieure. A l'inverse, on peut qualifier de luminophores, les produits qui, éventuellement après avoir été soumis à des traitements appropriés, développent des brillances convenables et suffisantes pour être utilisés directement par un applicateur, par exemple dans des lampes.

La description des luminophores selon l'invention va être faite ci-dessous.

Les luminophores

Les luminophores de l'invention sont constitués de, ou comprennent, les phosphates de l'invention telles que décrits plus haut.

De ce fait tout ce qui a été décrit précédemment au sujet de ces phosphates s'applique de même ici pour la description des luminophores selon l'invention. Il s'agit notamment de toutes les caractéristiques données plus haut sur la structure constituée par le coeur minéral et la coquille homogène, sur la nature du coeur minéral, sur celle de la coquille et notamment du phosphate de LaCeT ainsi que les caractéristiques de granulométrie.

Comme on le verra plus loin, les luminophores de l'invention sont obtenus à partir des phosphates/précurseurs par un traitement thermique qui a pour conséquence de ne pas modifier sensiblement les caractéristiques de ces phosphates telles que mentionnées ci-dessus.

La description des procédés de préparation des phosphates et des luminophores de l'invention va être faite ci-dessous.

Les procédés de préparation

Le procédé de préparation des phosphates de l'invention est caractérisé en ce qu'il comprend les étapes suivantes :

- (a) on additionne à un milieu aqueux de départ ayant un pH initial compris entre 1 et 5 et comprenant des particules du coeur minéral précité à l'état dispersé et des ions phosphates, une solution aqueuse de sels solubles de lanthane, de cérium et de terbium, de façon progressive et continue, en maintenant le pH du milieu réactionnel à une valeur sensiblement constante ce par quoi on obtient des particules comprenant un coeur minéral à la surface duquel est déposé un phosphate mixte de lanthane, de cérium et de terbium; puis

- (b) on sépare les particules obtenues du milieu réactionnel, et on les traite thermiquement à une température comprise entre 400 et 900°C.

Les conditions très spécifiques du procédé de l'invention conduisent, à l'issue de l'étape (b), à une localisation préférentielle (et dans la plupart des cas quasi-exclusive, voire exclusive) du phosphate de LaCeT formé sur la surface des particules du coeur, sous la forme d'une coquille homogène.

Le phosphate mixte de LaCeT peut précipiter pour former des morphologies différentes. Selon les conditions de préparation, on peut observer notamment la formation de particules aciculaires formant une couverture homogène sur la surface des particules du coeur minéral (morphologie dite " en piquants d'oursin ") ou la formation de particules sphériques (morphologie dite " en chou-fleur ").

Sous l'effet du traitement thermique de l'étape (b), la morphologie est essentiellement conservée.

Différentes caractéristiques et modes de réalisation avantageux du procédé de l'invention et des précurseurs et des luminophores vont maintenant être décrits plus en détails.

Dans l'étape (a) du procédé de l'invention, on réalise une précipitation directe d'un phosphate de LaCeT, à pH contrôlé, en faisant réagir la solution de sels solubles de lanthane, de cérium et de terbium avec le milieu aqueux de départ contenant des ions phosphates.

Par ailleurs, de façon caractéristique, la précipitation de l'étape (a) est conduite en présence de particules du coeur minéral, initialement présentes à l'état dispersé dans le milieu de départ, à la surface desquelles le phosphate mixte qui précipite va se fixer et qui sont généralement maintenues à l'état dispersé tout au long de l'étape (a), typiquement en laissant le milieu sous agitation.

On utilise avantageusement des particules de morphologie isotrope, de préférence sensiblement sphérique.

Dans l'étape (a) du procédé de l'invention, l'ordre d'introduction des réactifs est important.

En particulier, la solution des sels solubles de terres rares doit spécifiquement être introduite dans un milieu de départ qui contient initialement les ions phosphates et les particules du coeur minéral.

Dans cette solution, les concentrations des sels de lanthane, cérium et terbium peuvent varier dans de larges limites. Typiquement, la concentration totale en les trois terres rares peut être comprise entre 0,01 mol/litre et 3 moles par litre.

Des sels de lanthane, cérium et terbium solubles adaptés dans la solution sont notamment les sels hydrosolubles, comme par exemple les nitrates, chlorures, acétates, carboxylates, ou un mélange de ces sels. Des sels préférés selon l'invention sont les nitrates. Ces sels sont présents dans les quantités stoechiométriques nécessaires.

La solution peut comprendre en outre d'autres sels métalliques, comme par exemple des sels d'autres terres rares, de bore ou d'autres éléments de type dopant, promoteur ou stabilisant mentionnés plus haut.

Les ions phosphates initialement présents dans le milieu de départ et destinés à réagir avec la solution peuvent être introduits dans le milieu de départ sous forme de composés purs ou en solution, comme par exemple l'acide phosphorique, des phosphates d'alcalins ou des phosphates d'autres éléments métalliques formant un composé soluble avec les anions associés aux terres rares.

Selon un mode préféré de réalisation de l'invention, les ions phosphates sont initialement présents dans le mélange de départ sous forme de phosphates d'ammonium. Selon ce mode de réalisation, le cation ammonium se décompose lors du traitement thermique de l'étape (b), permettant ainsi d'obtenir un phosphate mixte de grande pureté. Parmi les phosphates d'ammonium, le phosphate diammonique ou monoammonique sont des composés particulièrement préférés pour la mise en oeuvre de l'invention.

Les ions phosphates sont avantageusement introduits en excès stoechiométrique dans le milieu de départ, par rapport à la quantité totale de lanthane, cérium et terbium présente dans la solution, à savoir avec un rapport molaire initial phosphate / (La+Ce+Tb) supérieur à 1, de préférence compris entre 1,1 et 3, ce ratio étant typiquement inférieur à 2, par exemple entre 1,1 et 1,5.

Selon le procédé de l'invention, la solution est introduite de façon progressive et continue dans le milieu de départ.

D'autre part, selon une autre caractéristique importante du procédé de l'invention, qui permet notamment d'obtenir un revêtement homogène des particules du coeur minéral par le phosphate mixte de LaCeT, le pH initial (pH$_0$) de la solution contenant les ions phosphates est compris entre 1 et 5, plus particulièrement entre 1 et 2. En outre, il est par la suite de préférence maintenu sensiblement à cette valeur pH$_0$ pendant toute la durée de l'addition de la solution.

Par pH maintenu à une valeur sensiblement constant on entend que le pH du milieu variera d'au plus 0,5 unité de pH autour de la valeur de consigne fixée et de préférence encore d'au plus 0,1 unité de pH autour de cette valeur.

Pour atteindre ces valeurs de pH et assurer le contrôle de pH requis, on peut additionner au milieu de départ des composés basiques ou acides ou des solutions tampons, préalablement et/ou conjointement à l'introduction de la solution .

Comme composés basiques adaptés selon l'invention, on peut citer, à titre d'exemples, les hydroxydes métalliques (NaOH, KOH, Ca(OH)$_2$,....) ou bien encore l'hydroxyde d'ammonium, ou tout autre composé basique dont les espèces le constituant ne formeront aucun précipité lors de leur addition dans le milieu réactionnel, par combinaison avec une des espèces par ailleurs contenues dans ce milieu et permettant un contrôle du pH du milieu de précipitation.

D'autre part, il est à noter que la précipitation de l'étape (a) est réalisée en milieu aqueux, généralement en utilisant l'eau comme unique solvant. Toutefois, selon un autre mode de réalisation envisageable, le milieu de l'étape (a) peut éventuellement être un milieu hydro-alcoolique, par exemple un milieu eau/éthanol.

Par ailleurs, la température de mise en oeuvre de l'étape (a) est généralement comprise entre 10°C et 100°C.

L'étape (a) peut comporter en outre une étape de mûrissement, à l'issue de l'addition de la totalité de la solution et préalablement à l'étape (b). Dans ce cas, ce mûrissement est avantageusement conduit en laissant le milieu obtenu sous agitation à la température de réaction, avantageusement pendant au moins 15 minutes après la fin de l'ajout de la solution .

Dans l'étape (b), les particules de surface modifiée telles qu'obtenues à l'issue de l'étape (a) sont d'abord séparées du milieu réactionnel. Ces particules peuvent être facilement récupérées à l'issue de l'étape (a), par tout moyen connu en soi, en particulier par simple filtration, ou éventuellement par d'autres types de séparations solide/liquide. En effet, dans les conditions du procédé selon l'invention, on précipite un phosphate mixte de LaCeT supporté, qui est non gélatineux et aisément filtrable.

Les particules récupérées peuvent ensuite avantageusement être lavées, par exemple avec de l'eau, dans le but de les débarrasser d'éventuelles impuretés, notamment des groupements nitrates et/ou ammoniums adsorbés.

A l'issue de ces étapes de séparation et, le cas échéant, de lavage, l'étape (b) comprend une étape spécifique de traitement thermique, à une température comprise entre 400 et 900°C. Ce traitement thermique comprend une calcination, le plus souvent sous air, de préférence conduit à une température d'au moins 600°C, avantageusement entre 700 et 900°C.

A l'issue de ce traitement on obtient un phosphate ou un précurseur selon l'invention.

Le procédé de préparation d'un luminophore selon l'invention comprend un traitement thermique à une température à plus de 900°C et avantageusement de l'ordre d'au moins 1000°C du phosphate tel qu'obtenu par le procédé décrit ci-dessus.

Bien que les particules de précurseur puissent elles-mêmes présenter des propriétés intrinsèques de luminescence, ces propriétés sont grandement améliorées par ce traitement thermique.

Ce traitement thermique a notamment pour conséquence de convertir l'ensemble des espèces Ce et Tb à leur état d'oxydation (+III). Il peut être réalisé selon des moyens connus en soi pour le traitement thermique de luminophores, en présence d'un agent fondant (aussi désigné comme " flux ") ou non, sous ou sans atmosphère réductrice, selon les cas.

Les particules du précurseur de l'invention présentent la propriété particulièrement remarquable de ne pas motter lors de la calcination, c'est à dire qu'elles n'ont généralement pas tendance à s'agglomérer et donc à se retrouver sous une forme finale de granulats grossiers de taille de 0,1 à plusieurs mm par exemple; il n'est donc pas nécessaire de procéder à un broyage préalable des poudres avant de conduire sur celles-ci les traitements classiques destinés à l'obtention du luminophore final, ce qui constitue encore un avantage de l'invention.

Selon une première variante, le traitement thermique est conduit en soumettant les particules de précurseur à un traitement thermique en présence d'un agent fondant.

A titre d'agent fondant, on peut citer le fluorure de lithium, le tétraborate de lithium, le chlorure de lithium, le carbonate de lithium, le phosphate de lithium, le chlorure de potassium, le chlorure d'ammonium, l'oxyde de bore et l'acide borique et les phosphates d'ammonium, ainsi que leurs mélanges.

L'agent fondant est mélangé aux particules de phosphate à traiter, puis le mélange est porté à une température de préférence comprise entre 1000°C et 1300°C.

Le traitement thermique peut être conduit sous atmosphère réductrice ($H_2$, $N_2/H_2$ ou $Ar/H_2$ par exemple) ou non ($N_2$, Ar ou air).

Selon une deuxième variante du procédé, on soumet les particules de phosphates au traitement thermique en l'absence d'agent fondant.

Cette variante peut en outre être indifféremment conduite sous atmosphère réductrice ou non réductrice, en particulier sous atmosphère oxydante comme par exemple de l'air, sans avoir à mettre en oeuvre des atmosphères réductrices, coûteuses. Bien entendu, il est tout à fait possible, bien que moins économique, de mettre également en oeuvre, toujours dans le cadre de cette seconde variante, des atmosphères réductrices ou non.

Un mode de réalisation spécifique du procédé de préparation du luminophore consiste à traiter le précurseur à une température de 1000 à 1300°C sous atmosphère d'argon et d'hydrogène.

Ce type de traitement est en lui-même connu et classiquement utilisé dans les procédés d'élaboration de luminophores, notamment pour adapter ces derniers à l'application souhaitée (morphologie des particules, état de surface, brillance, par exemple).

Après traitement, les particules sont avantageusement lavées, de manière à obtenir un luminophore le plus pur possible et dans un état désaggloméré ou faiblement aggloméré. Dans ce dernier cas, il est possible de désagglomérer le luminophore en lui faisant subir un traitement de désagglomération dans des conditions douces.

Les traitements thermiques précités permettent d'obtenir des luminophores qui conservent une structure coeur/coquille et une distribution granulométrique très proches de celles des particules du phosphate précurseur.

En outre, le traitement thermique peut être conduit sans induire des phénomènes sensibles de diffusion des espèces Ce et Tb de la couche luminophore externe vers de coeur.

Selon un mode de réalisation spécifique envisageable de l'invention, il est possible de conduire en une seule et même étape les traitements thermiques de l'étape (b) et celui pour la transformation du phosphate en luminophore. Dans ce cas, on obtient directement le luminophore sans s'arrêter au précurseur.

Les luminophores de l'invention ont des propriétés de photoluminescence améliorées.

Les luminophores de l'invention présentent des propriétés de luminescence intenses pour des excitations électromagnétiques correspondant aux divers domaines d'absorption du produit.

Ainsi, les luminophores de l'invention peuvent être utilisés dans les systèmes d'éclairage ou de visualisation présentant une source d'excitation dans la gamme UV (200 - 280 nm), par exemple autour de 254 nm. On notera en particulier les lampes trichromatiques à vapeur de mercure, par exemple de type tubulaire, les lampes pour rétro-éclairage des systèmes à cristaux liquides, sous forme tubulaire ou planaire (LCD Back Lighting). Ils présentent une forte brillance sous excitation UV, et une absence de perte de luminescence à la suite d'un post-traitement thermique. Leur luminescence est en particulier stable sous UV à des températures relativement élevées comprises entre l'ambiante et 300°C.

Les luminophores de l'invention constituent de bons luminophores verts pour les systèmes à excitation VUV (ou "plasma"), que sont par exemple les écrans plasma et les lampes trichromatiques sans mercure, notamment les lampes à excitation Xenon (tubulaires ou planaires). Les luminophores de l'invention possèdent une forte émission verte sous excitation VUV (par exemple, autour de 147 nm et 172 nm). Les luminophores sont stables sous excitation VUV.

Les luminophores de l'invention peuvent également être utilisés comme luminophores verts dans des dispositifs à excitation par diode électroluminescente. Ils peuvent être notamment utilisés dans des systèmes excitables dans le proche UV.

Ils peuvent être également utilisés dans des systèmes de marquage à excitation UV.

Les luminophores de l'invention peuvent être mis en oeuvre dans les systèmes de lampes et d'écrans par des techniques bien connues, par exemple par sérigraphie, par pulvérisation, par électrophorèse ou sédimentation.

Ils peuvent également être dispersés dans des matrices organiques (par exemple, des matrices plastiques ou des polymères transparents sous UV ...), minérales (par exemple, de la silice) ou hybrides organo-minérales.

L'invention concerne aussi, selon un autre aspect, les dispositifs luminescents du type précité, comprenant, à titre de source de luminescence verte, les luminophores tels que décrits plus haut ou les luminophores obtenus à partir du procédé décrit aussi précédemment.

Des exemples vont maintenant être donnés.

Dans les exemples qui suivent, les particules préparées ont été caractérisées en termes de granulométrie, morphologie et composition par les méthodes suivantes.

Mesures granulométriciues

Les diamètres de particules ont été déterminés au moyen d'un granulomètre laser (Malvem 2000) sur un échantillon de particules dispersées dans l'eau aux ultrasons (130 W) pendant 1 minute 30 secondes.

Microscopie électronique

Les clichés de microscopie électronique à transmission sont réalisés sur une coupe (microtomie) des particules, en utilisant un microscope TEM haute résolution de type JEOL 2010 FEG. La résolution spatiale de l'appareil pour les mesures de composition chimique par EDS (spectroscopie à dispersion en énergie) est < 2 nm. La corrélation des morphologies observées et des compositions chimiques mesurées permet de mettre en évidence la structure coeur-coquille, et de mesurer sur les clichés l'épaisseur de la coquille.

Les mesures de composition chimique peuvent être réalisées aussi par EDS sur des clichés effectués par STEM HAADF. La mesure correspond à une moyenne effectuée sur au moins deux spectres.

Diffraction aux rayons X

Les diffractogrammes X ont été réalisés en utilisant la raie $K_\alpha$ avec du cuivre comme anti-cathode, selon la méthode Bragg-Brendano. La résolution est choisie de manière à être suffisante pour séparer les raies du $LaPO_4$ : Ce, Tb et du $LaPO_4$, de préférence, elle est $\Delta(2\Theta)<0,02°$.

EXEMPLE 1

Cet exemple concerne la synthèse d'un coeur $LaPO_4$.

Dans 500 mL d'une solution d'acide phosphorique $H_3PO_4$ (1,725 mol/L) préalablement amenée à pH 1,9 par addition d'ammoniaque et portée à 60°C, sont ajoutés 500 mL d'une solution de nitrate de lanthane (1,5 mol/L). Le pH au cours de la précipitation est régulé à 1,9 par addition d'ammoniaque.

A l'issue de l'étape de précipitation, le milieu réactionnel est encore maintenu 1 h à 60°C.

Le précipité est ensuite récupéré par filtration, lavé à l'eau puis séché à 60°C sous air.

La poudre obtenue est ensuite soumise à un traitement thermique à 900°C sous air.

Le produit ainsi obtenu, caractérisé par diffraction des rayons X, est un orthophosphate de lanthane $LaPO_4$, de structure monazite.

La poudre est ensuite mélangée avec 1 % en poids d'une poudre de LiF, puis calcinée 2h à 1100°C sous atmosphère réductrice. Le produit obtenu est ensuite concassé, puis lavé par remise en suspension dans l'eau chaude à 80°C pendant 3h sous agitation. Enfin, la suspension est filtrée et séchée.

On obtient alors un phosphate de lanthane de phase monazite et de taille moyenne des particules, mesurée par granulométrie laser Malvern, $D_{50} = 4,3\ \mu m$, avec un indice de dispersion de 0,4. Sa surface spécifique est de 0,5 m$^2$/g.

Le diamètre moyen du coeur ainsi obtenu, mesuré par MEB, est de 3,2 $\mu$m.

EXEMPLE 2 COMPARATIF

Cet exemple concerne un luminophore selon l'art antérieur.

On prépare tout d'abord un précurseur de la manière suivante.

Dans un bécher de 1 litre, on prépare une solution de nitrates de terres rares (Solution A) comme suit : on mélange 29,37 g d'une solution de $La(NO_3)_3$ à 2,8 M (d = 1,678 g/L), 20,84 g d'une solution de $Ce(NO_3)_3$ à 2,88 M (d = 1,715 g/L) et 12,38 g d'une solution de $Tb(NO_3)_3$ à 2M (d=1,548) et 462 mL d'eau permutée, soit un total de 0,1 mol de nitrates de terres rares, de composition $(La_{0,49}Ce_{0,35}Tb_{0,16})(NO_3)_3$.

Dans un réacteur de 2 litres, on introduit (Solution B) 340 ml d'eau permutée, à laquelle on ajoute 13,27 g $H_3PO_4$ Normapur 85% (0,115 mole). La solution est portée à 60°C et de l'ammoniaque $NH_4OH$ 28% est ajoutée pour atteindre un pH de 1,5. Dans le pied de cuve ainsi préparé, on ajoute ensuite 23,4 g d'un phosphate de lanthane issu de l'exemple 1.

La solution A précédemment préparée est ajoutée sous agitation au mélange en 1 heure, en température (60°C) et sous régulation de
pH de 1,5. Le mélange obtenu est mûri 1 h à 60°C. A l'issue du mûrissement on laisse refroidir jusqu'à 30°C et l'on récupère le produit. Il est ensuite filtré sur fritté et lavé par deux volumes d'eau, puis séché et calciné 2h à 900°C sous air.

On obtient alors un phosphate de terre rare de phase monazite, de type coeur/coquille, présentant deux phases cristallines monazite de compositions distinctes, à savoir $LaPO_4$ et $(La,Ce,Tb)PO_4$. La taille des particules est de 6,0 $\mu$m ($D_{50}$), avec un indice de dispersion de 0,5.

Un cliché de MET est réalisé sur le produit enrobé en résine, préparé par ultramicrotomie (épaisseur ~100 nm) et disposé sur une membrane à trous. Les particules sont vues en coupe. Sur ce cliché, on observe une coupe de particule, dont le coeur est sphérique et est entouré d'une coquille d'épaisseur moyenne de 1,1 $\mu$m.

Ce précurseur est ensuite calciné à 1200°C pendant 4h sous atmosphère réductrice Ar/H$_2$ (5% d'hydrogène), afin d'obtenir le luminophore comparatif de référence.

L'efficacité du luminophore mesurée par le rendement de photoluminescence (PL) de ce luminophore est déterminée par l'intégration du spectre d'émission sous excitation 254 nm, mesuré avec un spectrofluorimètre dans la gamme de longueur d'onde de 450 nm à 700 nm. Elle est normalisée à 100%.

Les mesures d'efficacité des luminophores de l'invention seront mesurées en valeur relative par rapport à l'efficacité lumineuse de l'exemple comparatif.

EXEMPLE 3

Cet exemple concerne la préparation d'un précurseur selon l'invention.

Dans un réacteur de 1 L, on prépare une solution de nitrates de terres rares (Solution A) comme suit : on mélange 203,4 g d'une solution de $La(NO_3)_3$ à 454 g/L, 215 g d'une solution de $Ce(NO_3)_3$ à 496 g/L et 100,3 g d'une solution de $Tb(NO_3)_3$ à 447 g/L et 114,4 mL d'eau permutée, soit un total de 0,84 mol de nitrates de terres rares, de composition $(La_{0,40}Ce_{0,43}Tb_{0,17})(NO_3)_3$.

Dans un réacteur de 2,5 L, on introduit (Solution B) 1,1 L d'eau permutée, à laquelle on ajoute 115,7 g $H_3PO_4$ Normapur 85%. La solution est portée à 60°C. On ajoute de l'ammoniaque 12N pour atteindre un pH de 1,5. Dans le pied de cuve ainsi préparé, on ajoute ensuite 131 g d'un phosphate de lanthane issu de l'exemple 1.

La solution A précédemment préparée est ensuite ajoutée sous agitation au mélange en 1 heure, en température (60°C) et sous régulation de pH de 1,5. Le mélange obtenu est mûri 1 h à 60°C.

On laisse refroidir jusqu'à 30°C et l'on récupère le produit. Il est ensuite filtré sur fritté et lavé par deux volumes d'eau puis séché et calciné 2h à 900°C sous air.

On obtient alors un phosphate de terre rare de type coeur coquille et de phase monazite. Les diffractogrammes DRX montrent la présence de deux phases cristallines monazite de compositions distinctes, à savoir LaPO$_4$ et (La,Ce, Tb)PO$_4$.

Le produit présente une taille moyenne, mesurée en granulométrie laser Malvern, de 5,3 $\mu$m (D$_{50}$), avec un indice de dispersion de 0,3.

EXEMPLE 4

Cet exemple concerne un luminophore selon l'invention.

La poudre de précurseur obtenue à l'exemple 3 est calcinée pendant 4h sous atmosphère Ar/H$_2$ (5% d'hydrogène) à 1200°C.

La taille moyenne des particules, mesurée par granulométrie laser Malvern, est de 5,3 $\mu$m (D$_{50}$), avec un indice de dispersion de 0,5.

EXEMPLE 5

Cet exemple concerne la préparation d'un précurseur selon l'invention.

Dans un réacteur de 1 L, on prépare une solution de nitrates de terres rares (Solution A) comme suit : on mélange 259,7 g d'une solution de La(NO$_3$)$_3$ à 454 g/L, 249,6 g d'une solution de Ce(NO$_3$)$_3$ à 496 g/L et 92,7 g d'une solution de Tb(NO$_3$)$_3$ à 447 g/L et 135 mL d'eau permutée, soit un total de 0,98 mol de nitrates de terres rares, de composition (La$_{0,44}$Ce$_{0,43}$Tb$_{0,13}$)(NO$_3$)$_3$.

Dans un réacteur de 2,5L, on introduit (Solution B) 1 L d'eau permutée, à laquelle on ajoute 135 g H$_3$PO$_4$ Normapur 85%. La solution est portée à 60°C . On ajoute de l'ammoniaque 12N, pour atteindre un pH de 1,7. Dans le pied de cuve ainsi préparé, on ajoute ensuite 98 g d'un phosphate de lanthane issu de l'exemple 1.

La solution A précédemment préparée est ajoutée sous agitation au mélange en 1 heure, en température (60°C) et sous régulation de pH de 1,7. Le mélange obtenu est mûri 15 minutes à 60°C.

On laisse refroidir jusqu'à 30°C et l'on récupère le produit. Il est ensuite filtré sur fritté et lavé par deux volumes d'eau puis séché et calciné 2h à 900°C sous air.

On obtient alors un phosphate de terre rare de type coeur/coquille et de phase monazite. Les diffractogrammes DRX montrent la présence de de deux phases cristallines monazite de compositions distinctes, à savoir LaPO$_4$ et (La, Ce,Tb)PO$_4$.

Le produit présente une taille moyenne, mesurée en granulométrie laser Malvern, de 5,7 $\mu$m (D$_{50}$), avec un indice de dispersion de 0,3.

L'analyse d'un cliché MET réalisé dans les mêmes conditions que celles décrites dans l'exemple 2 donne une épaisseur de coquille de 0,8 $\mu$m.

EXEMPLE 6

Cet exemple concerne un luminophore selon l'invention.

La poudre de précurseur obtenue à l'exemple 4 est calcinée pendant 4h sous atmosphère Ar/H$_2$ (5% d'hydrogène) à 1200°C.

EXEMPLE 7

Cet exemple concerne la préparation d'un précurseur selon l'invention.

Dans un réacteur de 1 L, on prépare une solution de nitrates de terres rares (Solution A) comme suit : on mélange 126,3 g d'une solution de La(NO$_3$)$_3$ à 454 g/L, 299,9 g d'une solution de Ce(NO$_3$)$_3$ à 496 g/L et 89,6 g d'une solution de Tb(NO$_3$)$_3$ à 447 g/L et 117 mL d'eau permutée, soit un total de 0,98 mol de nitrates de terres rares, de composition (La$_{0,25}$Ce$_{0,60}$Tb$_{0,15}$)(NO$_3$)$_3$.

Dans un réacteur de 2,5L, on introduit (Solution B) 1 L d'eau permutée, à laquelle on ajoute 115,7 g H$_3$PO$_4$ Normapur 85%. La solution est portée à 60°C . On ajoute de l'ammoniaque 12N, pour atteindre un pH de 1,8.

Dans le pied de cuve ainsi préparé, on ajoute ensuite 131 g d'un phosphate de lanthane issu de l'exemple 1.

La solution A précédemment préparée est ajoutée sous agitation au mélange en 1 heure, en température (60°C) et sous régulation de pH de 1,8. Le mélange obtenu est mûri 15 minutes à 60°C.

On laisse refroidir jusqu'à 30°C et l'on récupère le produit. Il est ensuite filtré sur fritté et lavé par deux volumes d'eau puis séché et calciné 2h à 900°C sous air.

On obtient alors un phosphate de terre rare de type coeur/coquille et de phase monazite. Les diffractogrammes DRX montrent la présence de de deux phases cristallines monazite de compositions distinctes, à savoir LaPO$_4$ et (La,

Ce,Tb)PO$_4$.

Le produit présente une taille moyenne, mesurée en granulométrie laser Malvern, de 4,4 $\mu$m (D$_{50}$), avec un indice de dispersion de 0,3.

L'analyse d'un cliché MET réalisé dans les mêmes conditions que celles décrites dans l'exemple 2 donne une épaisseur de coquille de 0,5 $\mu$m.

EXEMPLE 8

Cet exemple concerne un luminophore selon l'invention.

La poudre de précurseur obtenue à l'exemple 7 est calcinée pendant 4h sous atmosphère Ar/H2 (5% d'hydrogène) à 1200°C.

On donne dans le tableau 1 ci-dessous, les caractéristiques des luminophores des exemples précédents.

Tableau 1

| Exemple | x | y | PL | D50 ($\mu$m) |
|---|---|---|---|---|
| 2 comparatif | 0,35 | 0,16 | 100 | 6,2 |
| 4 | 0,43 | 0,17 | 103 | 5,3 |
| 6 | 0,43 | 0,13 | 102 | 5,9 |
| 8 | 0,60 | 0,15 | 103 | 4,9 |

Dans le tableau 1, x et y correspondent aux indices x et y de la formule (1) donnée plus haut. On voit donc que les luminophores selon l'invention bien que présentant une granulométrie plus faible que le produit comparatif ont des rendements de photoluminescence (PL) supérieures à celui-ci, la différence étant significative compte tenu du type de mesure effectuée ici.

La figure 1 est un spectre d'émission du luminophore de l'exemple 4 sous excitation à 254 nm. Ce spectre montre que le produit émet bien dans le vert.

**Revendications**

1. Phosphate comprenant des particules constituées d'un coeur minéral et d'une coquille à base d'un phosphate de lanthane, de cérium et de terbium et recouvrant de façon homogène le coeur minéral sur une épaisseur égale ou supérieure à 300 nm, **caractérisé en ce que** les particules présentent un diamètre moyen compris entre 3 et 6 $\mu$m et **en ce que** le phosphate de lanthane, de cérium et de terbium répond à la formule générale (1) suivante :

$$La_{(1-x-y)}Ce_xTb_yPO_4 \qquad (1)$$

dans laquelle x et y vérifient les conditions suivantes :

$$0{,}4 \leq x \leq 0{,}7;$$

$$0{,}13 \leq y \leq 0{,}17.$$

2. Phosphate selon la revendication 1, **caractérisé en ce que** le phosphate de lanthane, de cérium et de terbium répond à la formule générale (1) dans laquelle x vérifie la condition $0{,}45 \leq x \leq 0{,}60$.

3. Phosphate selon la revendication 1 ou 2, **caractérisé en ce que** le phosphate de lanthane, de cérium et de terbium répond à la formule générale (1) dans laquelle y vérifie la condition $0{,}13 \leq y \leq 0{,}16$.

4. Phosphate selon l'une des revendications précédentes, **caractérisé en ce que** le coeur minéral des particules est à base d'un phosphate ou d'un oxyde minéral, plus particulièrement un phosphate de terre rare ou un oxyde d'aluminium.

**5.** Luminophore **caractérisé en ce qu'**il comprend un phosphate selon l'une des revendications précédentes.

**6.** Procédé de préparation d'un phosphate selon l'une des revendications 1 à 4, **caractérisé en ce qu'**il comprend les étapes suivantes :

- (a) on additionne à un milieu aqueux de départ ayant un pH initial compris entre 1 et 5 et comprenant des particules à l'état dispersé du coeur minéral précité et des ions phosphates, une solution aqueuse de sels solubles de lanthane, de cérium et de terbium, de façon progressive et continue, en maintenant le pH du milieu réactionnel à une valeur sensiblement constante ce par quoi on obtient des particules comprenant un coeur minéral à la surface duquel est déposé un phosphate mixte de lanthane, de cérium et de terbium; puis
- (b) on sépare les particules obtenues du milieu réactionnel et on les traite thermiquement à une température comprise entre 400 et 900°C.

**7.** Procédé selon la revendication 6, **caractérisé en ce que** dans l'étape (a), les ions phosphates sont introduits en excès stoechiométrique dans le milieu aqueux de départ, avec un rapport molaire initial phosphate / (La+Ce+Tb) supérieur à 1, de préférence compris entre 1,1 et 3.

**8.** Procédé de préparation d'un luminophore selon la revendication 5, **caractérisé en ce qu'**on traite thermiquement à une température supérieure à 900°C, avantageusement d'au moins 1000°C un phosphate selon la revendication 1 à 4 ou un phosphate obtenu par un procédé selon la revendication 6 ou 7.

**9.** Dispositif du type système à plasma, lampe trichromatiques à vapeur de mercure, lampe pour rétro-éclairage des systèmes à cristaux liquides, lampe trichromatique sans mercure, dispositif à excitation par diode électroluminescente, système de marquage à excitation UV, **caractérisé en ce qu'**il comprend ou **en ce qu'**il est fabriqué en utilisant un luminophore selon la revendication 5 ou un luminophore obtenu par le procédé selon la revendication 8.


**Patentansprüche**

**1.** Phosphat, umfassend Teilchen aus einem anorganischen Kern und einer Schale auf Basis eines Lanthancerterbiumphosphats, die den anorganischen Kern in einer Dicke größer gleich 300 nm homogen bedeckt, **dadurch gekennzeichnet, dass** die Teilchen.
einen mittleren Durchmesser zwischen 3 und 6 $\mu$m aufweisen und das Lanthancerterbiumphosphat der folgenden allgemeinen Formel (1) entspricht:

$$La_{(1-x-y)}Ce_xTb_yPO_4 \qquad (1)$$

worin x und y die folgenden Bedingungen erfüllen:

$$0,4 \leq x \leq 0,7;$$

$$0,13 \leq y \leq 0,17.$$

**2.** Phosphat nach Anspruch 1, **dadurch gekennzeichnet, dass** das Lanthancerterbiumphosphat der folgenden allgemeinen Formel (1) entspricht, worin x die Bedingung $0,45 \leq x \leq 0,60$ erfüllt.

**3.** Phosphat nach Anspruch 1 oder 2, **dadurch gekennzeichnet, dass** das Lanthancerterbiumphosphat der folgenden allgemeinen Formel (1) entspricht, worin y die Bedingung $0,13 \leq y \leq 0,16$ erfüllt.

**4.** Phosphat nach einem der vorhergehenden Ansprüche, **dadurch gekennzeichnet, dass** der anorganische Kern auf einem Phosphat oder einem anorganischen Oxid, spezieller einem Seltenerdmetallphosphat oder einem Aluminiumoxid, basiert.

**5.** Leuchtstoff, **dadurch gekennzeichnet, dass** er ein Phosphat nach einem der vorhergehenden Ansprüche umfasst.

6. Verfahren zur Herstellung eines Phosphats nach einem der Ansprüche 1 bis 4, **dadurch gekennzeichnet, dass** man: .

   - (a) ein wässriges Ausgangsmedium, das einen anfängliche pH-Wert zwischen 1 und 5 aufweist und dispergierte Teilchen des obigen anorganischen. Kerns und Phosphationen umfasst, allmählich und kontinuierlich mit einer wässrigen Lösung von löslichen Lanthan-, Cer- und Terbiumsalzen versetzt, wobei man den pH-Wert des Reaktionsmediums bei einem weitgehend konstanten Wert hält, wodurch man Teilchen mit einem anorganischen Kern, auf dessen Oberfläche ein gemischtes Lanthancerterbiumoxid abgeschieden ist, erhält; und dann
   - (b) die erhaltenen Teilchen von dem Reaktionsmedium trennt und bei einer Temperatur zwischen 400 und 900°C wärmebehandelt.

7. Verfahren nach Anspruch 6, **dadurch gekennzeichnet, dass** man in Schritt (a) die Phosphationen in stöchiometrischem Überschuss in das wässrige Ausgangsmedium einträgt, wobei das anfängliche Phosphat/(La+Ce+Tb)-Molverhältnis größer als 1 ist und vorzugsweise zwischen 1,1 und 3 liegt.

8. Verfahren zur Herstellung eines Leuchtstoffs nach Anspruch 5, **dadurch gekennzeichnet, dass** man ein Phosphat nach Anspruch 1 bis 4 oder ein nach dem Verfahren nach Anspruch 6 oder 7 erhaltenes Phosphat bei einer Temperatur von mehr als 900°C, vorteilhafterweise mindestens 1000°C, wärmebehandelt.

9. Vorrichtung vom Typ Plasmasystem, trichromatische Quecksilberdampflampe, Lampe zur Hintergrundbeleuchtung von Flüssigkristallsystemen, trichromatische Lampe ohne Quecksilber, Lumineszenzdiodenanregungsvorrichtung, UV-Anregungsmarkierungssystem, **dadurch gekennzeichnet, dass** sie einen Leuchtstoff nach Anspruch 5 oder einen nach dem Verfahren nach Anspruch 8 erhaltenen Leuchtstoff umfasst oder unter Verwendung eines Leuchtstoffs nach Anspruch 5 oder eines nach dem Verfahren nach Anspruch 8 erhaltenen Leuchtstoffs hergestellt worden ist.

## Claims

1. Phosphate comprising particles consisting of a mineral core and of a shell based on a lanthanum cerium terbium phosphate and homogeneously covering the mineral core over a depth equal to or greater than 300 nm, **characterized in that** the particles have a mean diameter of between 3 and 6 $\mu$m and **in that** the lanthanum cerium terbium phosphate satisfies the following general formula (1):

$$La_{(1-x-y)}Ce_xTb_yPO_4 \qquad (1)$$

in which x and y satisfy the following conditions:

$$0.4 \leq x \leq 0.7;$$

and

$$0.13 \leq y \leq 0.17.$$

2. Phosphate according to Claim 1, **characterized in that** the lanthanum cerium terbium phosphate satisfies the general formula (1) in which x satisfies the condition $0.45 \leq x\ 0.60$.

3. Phosphate according to Claim 1 or 2, **characterized in that** the lanthanum cerium terbium phosphate satisfies the general formula (1) in which y satisfies the condition $0.13 \leq y \leq 0.16$.

4. Phosphate according to one of the preceding claims, **characterized in that** the mineral core of the particles is based on a phosphate or on a mineral oxide, more particularly a rare-earth phosphate or an aluminum oxide.

5. Phosphor **characterized in that** it comprises a phosphate according to one of the preceding claims.

6. Method of preparing a phosphate according to one of Claims 1 to 4, **characterized in that** it comprises the following steps:

- (a) an aqueous solution of soluble lanthanum, cerium and terbium salts is steadily and continuously added to a starting aqueous medium having an initial pH of between 1 and 5 and comprising particles in the dispersed state of the aforementioned mineral core and phosphate ions, while maintaining the pH of the reaction medium at a substantially constant value, thereby obtaining particles comprising a mineral core on the surface of which a mixed lanthanum cerium terbium phosphate is deposited; and then
- (b) the particles obtained are separated from the reaction medium and are heat-treated at a temperature between 400 and 900°C.

7. Method according to Claim 6, **characterized in that**, in step (a), the phosphate ions are introduced in stoichiometric excess into the starting aqueous medium, with an initial phosphate/(La+Ce+Tb) molar ratio of greater than 1, preferably between 1.1 and 3.

8. Method of preparing a phosphor according to Claim 5, **characterized in that** a phosphate according to claims 1 to 4 or a phosphate obtained by a method according to claim 6 or 7 is heat-treated at a temperature above 900°C, advantageously at least 1000°C.

9. Device of the following types: plasma systems; trichromatic mercury vapor lamps; lamps for backlighting liquid-crystal systems; mercury-free trichromatic lamps; LED excitation devices; or UV excitation marking systems, **characterized in that** it comprises, or **in that** it is manufactured using, a phosphor according to Claim 5 or a phosphor obtained by the method according to Claim 8.

Figure 1

Longueur d'onde (nm)

**EP 2 411 485 B1**

## RÉFÉRENCES CITÉES DANS LA DESCRIPTION

**Documents brevets cités dans la description**

- WO 2008012266 A